# EUROPÄISCHE PATENTANMELDUNG

(11) **EP 0 782 156 A2**
(43) Veröffentlichungstag der Anmeldung: **02.07.1997**
(21) Anmeldenummer: 96203372.6
(22) Anmeldetag: 28.11.1996
(51) Int. Cl.: H01G 4/12

(54) **Vielschichtkondensator mit Dielektrikum aus modifiziertem Bariumstrontiumtitanat**

(30) Priorität: 12.12.1995 DE 19546237
(71) Anmelder: Philips Patentverwaltung GmbH, 22335 Hamburg (DE); PHILIPS ELECTRONICS N.V., 5621 BA Eindhoven (NL)
(72) Erfinder: Mateika, Dieter, Dr., Röntgenstrasse 24, 22335 Hamburg (DE); Huppertz, Petra, Röntgenstrasse 24, 22335 Hamburg (DE); Albertsen, Knut, Dr., Röntgenstrass e 24, 22335 Hamburg (DE); Steigelmann, Oliver, Dr., Röntgenstrasse 24, 22335 Hamburg (DE)
(74) Vertreter: Volmer, Georg, Dipl.-Ing.

(57) **Zusammenfassung**

Ein Kondensator mit keramischem Dielektrikum und mindestens zwei Elektroden, wobei das keramische Dielektrikum im wesentlichen aus einer dielektrischen, keramischen Zusammensetzung mit einer Hauptkomponente aus BaTiO₃ und/oder [Ba_{1-y}Sr_{y}]TiₓO_{3-z} mit 0.95 ≤ x ≤ 0.995, 0 ≤ y ≤ 0,04, z = 2(1-x) und mit mindestens einem Additiv aus der Gruppe bestehend aus XMnO₃, X₂MoO₆, X₂WO₆, X₂SiO₅ + Mn₂SiO₄ und Li₂SiO₃ + Mn₂SiO₄, und mindestens einem Additiv aus der Gruppe bestehend aus Li₂SiO₃, SiO₂ und einer bei 800°C kalzinierte Mischung aus 6 Mol-% Li₂O, 13 Mol-% BaO, 13 mol-% SrO, 13 Mol-% MgO und 55 Mol-% SiO₂, und gegebenenfalls einem Additiv aus der Gruppe bestehend aus XInO₃, XGaO₃ und XAlO₃ besteht, wobei X ein oder mehrere Elemente der Gruppe Y, Dy und Er ist, zeichnet sich durch eine flache ΔC/Δt-Kurve und ein stabiles dielektrisches Verhalten unter Temperatur- und Spannungseinfluß aus.

## Beschreibung

Gegenstand der Erfindung ist ein Kondensator, insbesondere ein Vielschichtkondensator, mit einem keramischen Dielektrikum und mindestens zwei Elektroden, wobei das Dielektrikum im wesentlichen aus einer dielektrischen, keramischen Zusammensetzung mit einer Hauptkomponente aus Bariumtitanat oder einem Barium-Strontiumtitanat und Additiven besteht.

Die Qualität von Vielschichtkondensatoren wird durch die chemische Zusammensetzung ihres Dielektrikums und der Elektroden und durch ihre Herstellungsbedingungen bestimmt. Während der Herstellung laufen verschiedene Reduktions- und Oxidationsprozesse ab. Bariumtitanat wird in reduzierender Atmosphäre halbleitend, es ist in diesem Zustand als Dielektrikum ungeeignet. Die Herstellung der Vielschichtkondensatoren kann zwar unter oxidierenden Bedingungen erfolgen, aber nur wenn das Elektrodenmaterial aus Rhodium oder Platin besteht. Rhodium und Platin sind jedoch sehr teuer, ihr Anteil an den Herstellungskosten kann bis zu 50 % betragen. Um die Herstellungskosten der Vielschichtkondensatoren zu senken, wird immer häufiger das sehr viel billigere Nickel als Elektrodenmaterial verwendet. Nickel wird jedoch leicht oxidiert, deshalb müssen Vielschichtkondensatoren mit Nickelelektroden in inerter oder leicht reduzierender Atmosphäre gesintert werden. An sich würde es hierbei wie oben angegeben durch Reduktionsvorgänge zur Bildung von dreiwertigem Titan kommen, wodurch die Lebensdauer der Kondensatoren extrem verkürzt wird. Inzwischen ist es gelungen, die Reduzierbarkeit des Bariumtitanates durch Additive, die Akzeptoren sind wie Co₂O₃, Cr₂O₃ oder MnO, abzuschwächen. Sie haben die Aufgabe, die Bildung von dreiwertigem Titan zu hemmen. Durch diese Additive läßt sich aber nicht verhindern, daß während des Sinterprozesses in reduzierender Atmosphäre Sauerstoffleerstellen im Kristallgitter entstehen. Hierdurch wird die Lebensdauer der Kondensatoren drastisch verkürzt. Die Bildung von Sauerstoffleerstellen kann rückgängig gemacht werden, wenn die Kondensatoren nach dem Sintern in reduzierender Atmosphäre in schwachoxidieren- der Atmosphäre bei Temperaturen zwischen 600 und 1100°C getempert werden. Dabei füllen sich die Sauerstoffleerstellen im Gitter wieder auf. Nachteil der Temperung ist die deutliche Abnahme der Dielektrizitätskonstante ε und der negative Einfluß auf die ΔC/Δt-Kurve, d.h. die Temperaturabhängigkeit der Dielektrizitätskonstanten. Üblicherweise müssen Vielschichtkondensatoren die Norm X7R erfüllen, also eine Temperaturabhängigkeit der spezifischen Dielektrizitätskonstanten von ± 15 % des Wertes bei 25°C über den Temperaturbereich von -55°C bis 125°C und von ± 15 % des Wertes bei 20°C über den Temperaturbereich von -25°C bis 85°C zeigen.

Um die Temperaturabhängigkeit der Dielektrizitätskonstante von Bariumtitanat und dotiertem Bariumtitanat zu reduzieren, werden ihm verschiedene Zusätze beigefügt. Beispielsweise ist es aus der EP 0425 971 ein Kondensator mit Festkörperdielektrikum bekannt, das im wesentlichen besteht aus einem Bariumtitanat der Formel (Baₖ₋ₓMₓ)OₖTiO₂, in der M zumindest eines von Calcium und Strontium, k eine Zahl im Bereich von 1,00 bis 1,05 und x eine Zahl von 0,01 bis 0,05 ist, und 0,01 bis 3,00 Gew.-% eines ersten Additivbestandteiles von zumindestens Dichromtrioxid und Aluminiumoxid und von 0,2 bis 5,0 Gew.-% eines zweiten Additivbestandteiles von mindestens eines aus der Gruppe Bortrioxid, Lithiumoxid, Siliciumdioxid, Bariumoxid, Strontiumoxid, Calciumoxid, Magnesiumoxid und Zinkoxid ausgewählten Bestandteiles.

Ein weiteres wichtiges Qualitätskriterium für Vielschichtkondensatoren ist die Lebensdauer. Alle Keramiken degradieren in gewissem Umfang mit der Zeit. Beispielsweise können in dotierten Keramiken, die aufgrund ihrer spezifischen Dotierung Sauerstoffleerstellen mit großer Beweglichkeit enthalten, diese Leerstellen unter dem Einfluß von elektrischer Spannung und Temperatur wandern. Dadurch ändert sich mit der Zeit der Isolationswiderstand und die Dielektrizitäskonstante und die Lebensdauer der dotierten Keramik ist begrenzt.

Es ist daher die Aufgabe der vorliegenden Erfindung, einen Kondensator, insbesondere einen Vielschichtkondensator, zu schaffen mit einem keramischen Dielektrikum und mindestens zwei Elektroden, wobei das Dielektrikum im wesentlichen aus einer dielektrischen, keramischen Zusammensetzung mit einer Hauptkomponente aus Bariumtitanat oder aus einem Barium-Strontitumtitanat und mit Additiven besteht, der sich durch eine hohe Dielektrizitätskonstante, niedrige Temperaturabhängigkeit der Dielektrizitätskonstanten über einen weiten Temperaturbereich sowie eine lange Lebensdauer auszeichnet.

Erfindungsgemäß wird die Aufgabe gelöst, durch einen Kondensator mit keramischem Dielektrikum und mindestens zwei Elektroden, wobei das keramische Dielektrikum im wesentlichen aus einer dielektrischen, keramischen Zusammensetzung besteht mit einer Hauptkomponente aus BaTiO₃ und/oder [Ba_{1-y}Sr_{y}]TiₓO_{3-z} mit 0.95 ≤ x ≤ 0.995, 0 ≤ y ≤ 0,04, z = 2(1-x) und mit mindestens einem Additiv aus der Gruppe bestehend aus XMnO₃, X₂MoO₆, X₂WO₆, X₂SiO₅ + Mn₂SiO₄ und Li₂SiO₃ + Mn₂SiO₄, und mindestens einem Additiv aus der Gruppe bestehend aus Li₂SiO₃, SiO₂ und einer bei 800°C kalzinierte Mischung aus 6 Mol-% Li₂O, 13 Mol-% BaO, 13 mol-% SrO, 13 Mol-% MgO und 55 Mol-% SiO₂, und gegebenenfalls einem Additiv aus der Gruppe bestehend aus XInO₃, XGaO₃ und XAlO₃, wobei X ein oder mehrere Elemente der Gruppe Y, Dy und Er ist.

Der Erfindung liegt die Erkenntnis zugrunde, daß durch die erfindungsgemäßen Additive gezielt Mikrospannungen im Kristallgitter erzeugt werden, die die Temperatur- und Langzeitstabilität der dielektrischen Parameter günstig beeinflussen.

Ein erfindungsgemäßer Kondensator zeichnet sich durch eine flache ΔC/Δt-Kurve und ein stabiles dielektrisches Verhalten unter Temperatur- und Spannungseinfluß aus und eine lange Lebendauer aus.

Nach einer bevorzugten Ausführungsform ist mindestens ein Additiv aus der Gruppe 0,05 bis 3 Mol-% XMnO₃, 0,025 bis 3 Mol-% X₂MoO₆, 0,025 bis 3 Mol-% X₂WO₆, 0,1 bis 2 Mol-% X₂SiO₅ + Mn₂SiO₄, 0,1 bis 2 Mol-% Li₂SiO₃ + Mn₂SiO₄, und mindestens ein Additiv aus der Gruppe 0,1 bis 3 Mol-% Li₂SiO₃, 0,1 bis 3 Mol-% SiO₂, 0.2 bis 2,5 Gew.-% einer bei 800°C kalzinierte Mischung aus 6 Mol-% Li₂O, 13 Mol-% BaO, 13 mol-% SrO, 13 Mol-% MgO und 55 Mol-% SiO₂, und gegebenenfalls ein Additiv aus der Gruppe 0,025 bis 10 Mol-% XInO₃, 0,025 bis 10 Mol-% XGaO₃, 0,025 bis 10 Mol-% XAlO₃.

Besonders bevorzugt ist eine Ausführungsform mit mindestens einem Additiv aus der Gruppe bestehend aus 0,03 Mol-% XMnO₃, 0,01 Mol-% X₂MoO₆, 0,02 Mol-% X₂WO₆, und einem weiteren Additiv bestehend aus 1,0 Gew.-% einer bei 800°C kalzinierte Mischung aus 6 Mol-% Li₂O, 13 Mol-% BaO, 13 mol-% SrO, 13 Mol-% MgO und 55 Mol-% SiO₂.

Nach einer weiteren bevorzugten Ausführungsform bestehen die Elektroden aus Nickel.

Die Erfindung betrifft weiterhin eine keramische dielektrische Zusammensetzung mit einer Hauptkomponente aus BaTiO₃ und/oder [Ba_{1-y}Sr_{y}]TiₓO_{3-z} mit 0.95 ≤ x ≤ 0.995, 0 ≤ y ≤ 0,04, z = 2(1-x) und mit mindestens einem Additiv aus der Gruppe bestehend aus XMnO₃, X₂MoO₆, X₂WO₆, X₂SiO₅ + Mn₂SiO₄ und Li₂SiO₃ + Mn₂SiO₄, und mindestens einem Additiv aus der Gruppe bestehend aus Li₂SiO₃, SiO₂ und einer bei 800°C kalzinierte Mischung aus 6 Mol-% Li₂O, 13 Mol-% BaO, 13 mol-% SrO, 13 Mol- % MgO und 55 Mol- % SiO₂, und gegebenenfalls einem Additiv aus der Gruppe bestehend aus XInO₃, XGaO₃ und XAlO₃.

Nachfolgend wird die Erfindung näher beschrieben und anhand von Beispielen erläutert.

Der erfindungsgemäße keramische Vielschichtkondensator umfaßt ein keramisches Dielektrikum, das aus einer Vielzahl von oxidischen dielektrischen Schichten mit einer Dicke von nicht mehr als 50µ besteht, sowie einer Vielzahl von inneren Elektroden, die schichtförmig in dem Dielektrikum übereinander angeordnet sind und sich abwechselnd zu zwei gegenüberliegenden Endflächen des Dielektrikums erstrecken. Auf den Endflächen des keramischen Dielektrikums sind metallische Kontaktelektroden als äußere Anschlüße vorgesehen, die mit den entsprechenden inneren metallischen Elektroden verbunden sind.

Material für das keramische Dielektrikum ist eine dielektrische keramische Zusammensetzung, die aus einer Hauptkomponente aus BaTiO₃ und/oder [Ba_{1-y}Sr_{y}]TiₓO_{3-z} mit 0.95 ≤ x ≤ 0.995, 0 ≤ y ≤ 0,04, z = 2(1-x) und mit mindestens einem Additiv aus der Gruppe bestehend aus XMnO₃, X₂MoO₆, X₂WO₆, X₂SiO₅ + Mn₂SiO₄ und Li₂SiO₃ + Mn₂SiO₄, und mindestens einem Additiv aus der Gruppe bestehend aus Li₂SiO₃, SiO₂ und einer bei 800°C kalzinierte Mischung aus 6 Mol-% Li₂O, 13 Mol-% BaO, 13 mol-% SrO, 13 Mol-% MgO und 55 Mol-% SiO₂, und gegebenenfalls einem Additiv aus der Gruppe bestehend aus XInO₃, XGaO₃ und XAlO₃ besteht.

Das Additiv aus einer bei 800°C kalzinierte Mischung aus 6 Mol-% Li₂O, 13 Mol-% BaO, 13 mol-% SrO, 13 Mol-% MgO und 55 Mol-% SiO₂ wird nachfolgend als GL3 bezeichnet. Dieses Additiv erfüllt drei wesentliche Funktionen. Beim Sinterprozeß bildet sich aus der Oxidmischung eine Flüssigphase. Hierdurch wird die Sintertemperatur der Kondensatoren deutlich erniedrigt. In der Flüssigphase werden die Additive gelöst und hierdurch gleichmäßig über die Oberfläche der Barium - oder Bariumstrontiumtitanatkörner verteilt. Diese Verteilerfunktion ist sehr wichtig für den Aufbau der Körner aus Kern und Hülle. Weiterhin wirkt die GL3 - Zusammensetzung als Puffer, der beim Sintervorgang die nicht umgesetzte Bestandteile der Ausgangsmischung als Silikate bindet. Andererseits verhindert dieses Additiv auch ein Auslaugen (leaching) kleiner Konzentrationen an z.B. SrO, da SrO als Komponente enthalten ist.

Die Materialauswahl für die Elektroden unterliegt keinen besonderen Beschränkungen, sodaß man hierfür ein Metall oder eine Kombination von zwei oder mehreren üblicherweise angewandten Metalle verwenden kann. Die Elektroden können aus Edelmetallen, wie Platin, Palladium, Gold oder Silber bestehen. Sie können auch Chrom, Zirkonium, Vanadium, Zink, Kupfer, Zinn, Blei, Mangan, Molybdän, Wolfram, Titan oder Aluminium enthalten. Bevorzugt bestehen sie aus einem Nichtedelmetall wie Nickel oder Eisen oder Cobalt.

Die Vielschichtkondensatoren werden aus grünen keramischen Folien zusammengesetzt, die durch ein Foliengießverfahren hergestellt werden. Das Foliengießverfahren besteht im wesentlichen aus der Suspergierung eines feingemahlenen Pulvers der keramischen dielektrischen Zusammensetzung in organischen oder wässrigen Lösungen unter Einsatz von Bindern und Plastifizieren und dem Gießen der so hergestellten Schlicker auf eine sich bewegende Trägeroberfläche. Nach dem Verdampfen des Lösungsmittels bleibt je nach Bindersystem eine mehr oder weniger flexible Folie zurück, die geschnitten, mit dem Muster der inneren Elektroden bedruckt und laminiert (gestapelt) wird. Aus dem Laminat werden die einzelnen Vielschichtkondensatoren ausgeschnitten. Diese werden zunächst in schwach reduzierender Atmosphäre bei Temperaturen zwischen 1100 und 1400 °C gesintert und anschließend in schwach oxidierender Atmosphäre bei Temperaturen zwischen 600 und 1100°C getempert. Zur Bildung der äußeren Elektroden werden an den Endflächen der Kondensatoren eine Metallpaste, die beispielsweise Nickel enthält, aufgetragen und eingebrannt. Die äußeren Elektroden können aber auch durch Aufdampfen einer Goldschicht aufgebracht werden.

Das erfindungsgemäße keramische Dielektrikum hat eine besondere Mikrostruktur aus zweiphasigen Körnern. In dem erfindungsgemäßen keramischen Dielektrikum weisen die einzelnen Kristallitkörner einen Schichtaufbau auf aus einem Kern und einer äußeren Hülle (Core-Shell Grains). Zirkonmodifiziertes Bariumtitanat mit einem derartigen Schichtaufbau und der Einfluß des Schichtaufbaus auf die dielektrischen Eigenschaften von zirkonmodifiziertem Bariumtitanat ist in J. Am. Ceram.Soc., 73 [5] 1268-73 (1990) beschrieben. Der Kern der Kristallitkörner kann aus nahezu unverändertem reinem Bariumtitanat, aus Bariumtitanat und Bariumstrontiumtitanant [Ba₁₋ _{y}Sr_{y}]TiₓO_{3-z} mit 0.95 ≤ x ≤ 0.995, 0 ≤ y ≤ 0,04, z = 2(1-x) oder reinem Bariumstrontiumtitanat [Ba_{1-y}Sr_{y}]TiₓO_{3-z} mit 0.95 ≤ x ≤ 0.995, 0 ≤ y ≤ 0,04, z = 2(1-x) bestehen. Bariumtitanat und Bariumstrontiumtitanat nach der Erfindung haben eine tetragonale Kristallstruktur. Die Hülle enthält zusätzlich die erfindungsgemäßen Additive. Die Additive reagieren in der Hülle unter Mischkristallbildung mit der Hauptkomponente oder bilden epitaktische Schichten. Durch den Einbau von Gastionen aus den Additiven in die äußere Hülle des Bariumtitanat- oder Bariumstrontiumtitanat entstehen Bariumtitanatderivate mit kubischer Struktur. Einerseits kann dies durch Mischkristallbildung erfolgen, andererseits auch durch spannungsinduzierte Phasenübergänge. Durch den Einbau von Gastionen in die äußere Hülle des Barium- oder Bariumstrontiumkristalls bilden sich dabei Kristallzonen mit unterschiedlichen Gitterkonstanten und Ausdehnungskoeffizienten im Vergleich zum Kristallkern. An der Grenze zwischen Kristallkern und Mischkristallzone bilden sich mechanische Spannungen, die in den angrenzenden Kristallbereichen eine Phasenumwandlung von tetragonal → kubisch induzieren. Eine solche Kombination von Kristallbereichen im Kristallitkorn mit unterschiedlicher Kristallstruktur hat zur Folge, daß sich das Kapazitätsmaximum in der ΔC/Δt-Kurve, beim Phasenübergang von tetragonal → kubisch bei 120°C abflacht.

Zur Charakterisierung der erfindungsgemäßen Kondensatoren wurden in bekannter Weise die Dielektrizitätskonstante ε bei 25°C vor dem Tempern und die Dielektrizitätskonstante ε* bei 25°C nach dem Tempern der Proben zwischen 600 und 1100 °C, der Verlustfaktor tg δ und das RC-Glied bei 125°C und bei t = 60 s (Zeitverhalten des Kondensators) gemessen. Die Lebensdauer wird in einem beschleunigten Lebensdauertest (ALT) bei 350°C und 900 V gemessen. Dazu werden mit Elektroden kontaktierte Test-Pillen hergestellt, auf 350°C aufgeheizt und es wird Spannung angelegt. Man mißt den Strom, aus dem der Isolationswiderstand berechnet wird. Nach Start des Tests ist der Isolationswiderstand zunächst hoch. Im weiteren bleibt der Isolationswiderstand im wesentlichen konstant auf hohem Niveau. Erst nach einer gewissen charakteristischen Degradationszeit beginnt der Isolationswiderstand abzufallen. Der Strom wächst in einer zur bisherigen Meßzeit kurzen Zeit um mehrere Größenordnungen an. Die "Lebensdauer" ist definiert als die Zeit, in dem der Probenstrom um eine Größenordnung angewachsen ist.

Aus Tab. 1 ergibt sich, daß Kondensatoren mit den erfindungsgemäßen Additiven gegenüber Kondensatoren mit Additiven nach dem Stand der Technik gemäß Nr. 1, 2 und 3 eine deutlich erhöhte Lebensdauer besitzen.

### Ausführungsbeispiel

Für die Herstellung eines Vielschichtkondensators mit einem keramischen Dielektrikum mit der Hauptkomponente [Ba_{1-y}Sr_{y}]Ti_{.989}O_{3-z} und den Additiven 0,6 Mol- % XMnO₃, 0,5 Gew.-% GL3 sowie 0,6 Mol-% XInO₃ werden 2501,2 g BaTiO₃, 8g TiO₂, 43,4 g SrCO₃, 16,6 g XInO₃ und 12,5 g GL3 in einer Planetkugelmühle zwei Stunden gemahlen und gemischt. Als Mahlflüssigkeit wird Cyclohexan benutzt. GL3 besteht aus einer Mischung aus 6 Mol-% Li₂O, 13 Mol-% BaO, 13 mol-% SrO, 13 Mol-% MgO und 55 Mol-% SiO₂ . Die GL3-Mischung wird vor der Zugabe zur Hauptkomponente 1 Stunde bei 800°C an Luft vorkalziniert.

Nach dem Mahlen in der Planetkugelmühle wird das Gemisch unter einem Oberflächenverdampfer an Luft getrocknet und danach bei 750°C kalziniert. Zu dem kalzinierten Pulver werden 11,6 g XMnO₃ hinzugegeben und anschließend ebenfalls eine Stunde in der Planetkugelmühle gemahlen bzw. gemischt. Nach dem Trocknen unter dem Oberflächenverdampfer ist die dielektrische keramische Zusammensetzung fertig für die weitere Verarbeitung.

Man mischt das pulverförmige Material mit Polyvinylalkohol als Bindemittel, einem oberflächenaktiven Mittel, einem Dispergiermittel und Wasser zu einem Schlicker. Den Schlicker verarbeitet man in einer Rakelbeschichtungseinrichtung zu grünen keramischen Folien mit einer Dicke von 20 µm.

Die grüne Folie wird zu Folienkarten geschnitten, mit einer Nickelpaste mit dem muster der inneren Elektroden bedruckt, gestapelt und zusammengepreßt und in die einzelnen Kondensatoren getrennt. Die Kondensatoren werden bei Temperaturen zwischen 1200 und 1400°C gesintert. Während des Sinterprozesses wird durch den Ofen ein Gasgemisch bestehend aus 99,7 % N₂ und 0,3 % H₂ geleitet. Der Sauerstoffpartialdruck wird über den Wasserdampfgehalt der Ofenatmosphäre geregelt. Nach dem Sintern werden die Kondensatoren in einem Temperofen bei Temperaturen zwischen 650°C und 1100°C getempert. Während des Temperprozesses wird durch den Ofen ein Gasgemisch bestehend aus Stickstoff mit 50 - 100 ppm Sauerstoff geleitet.

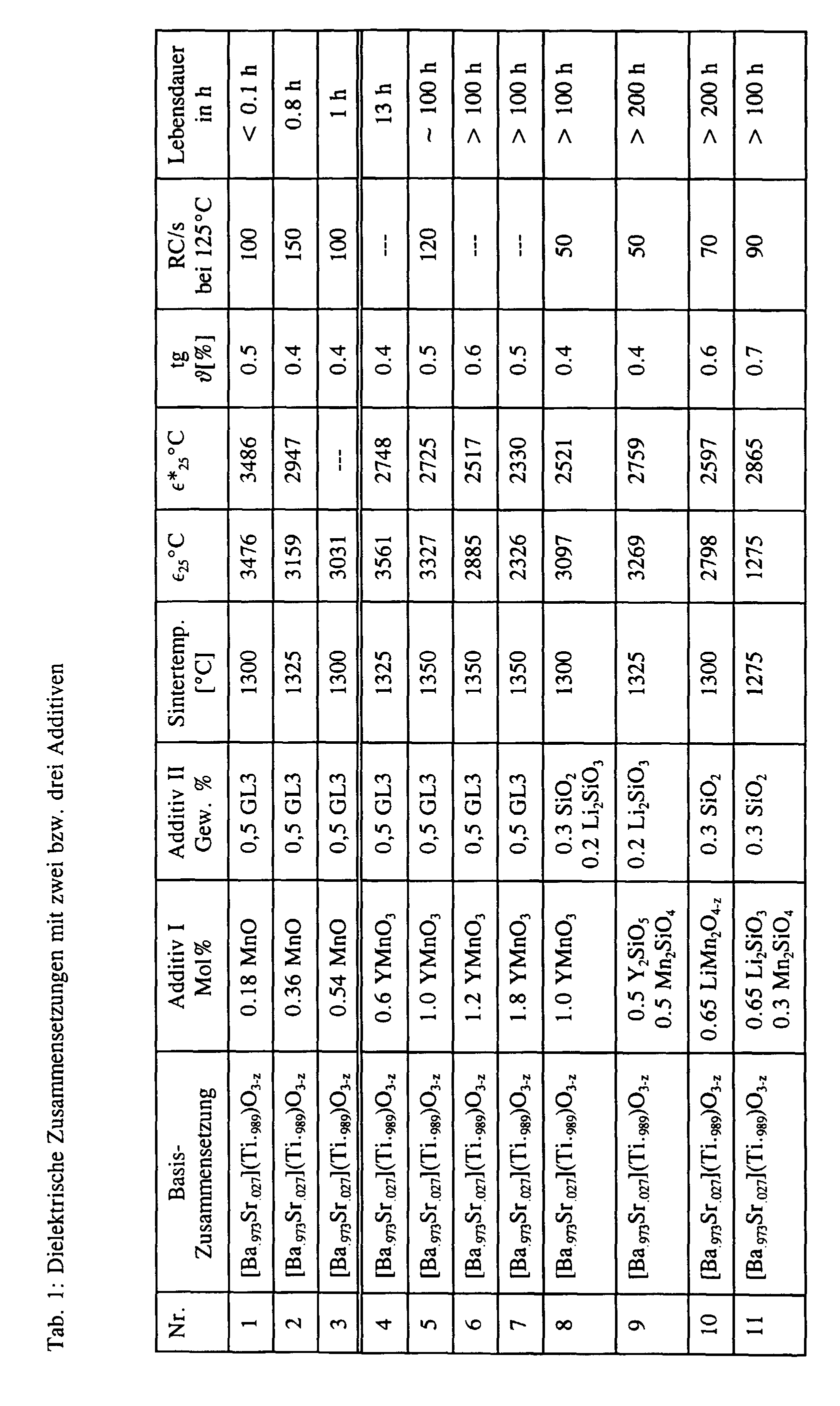

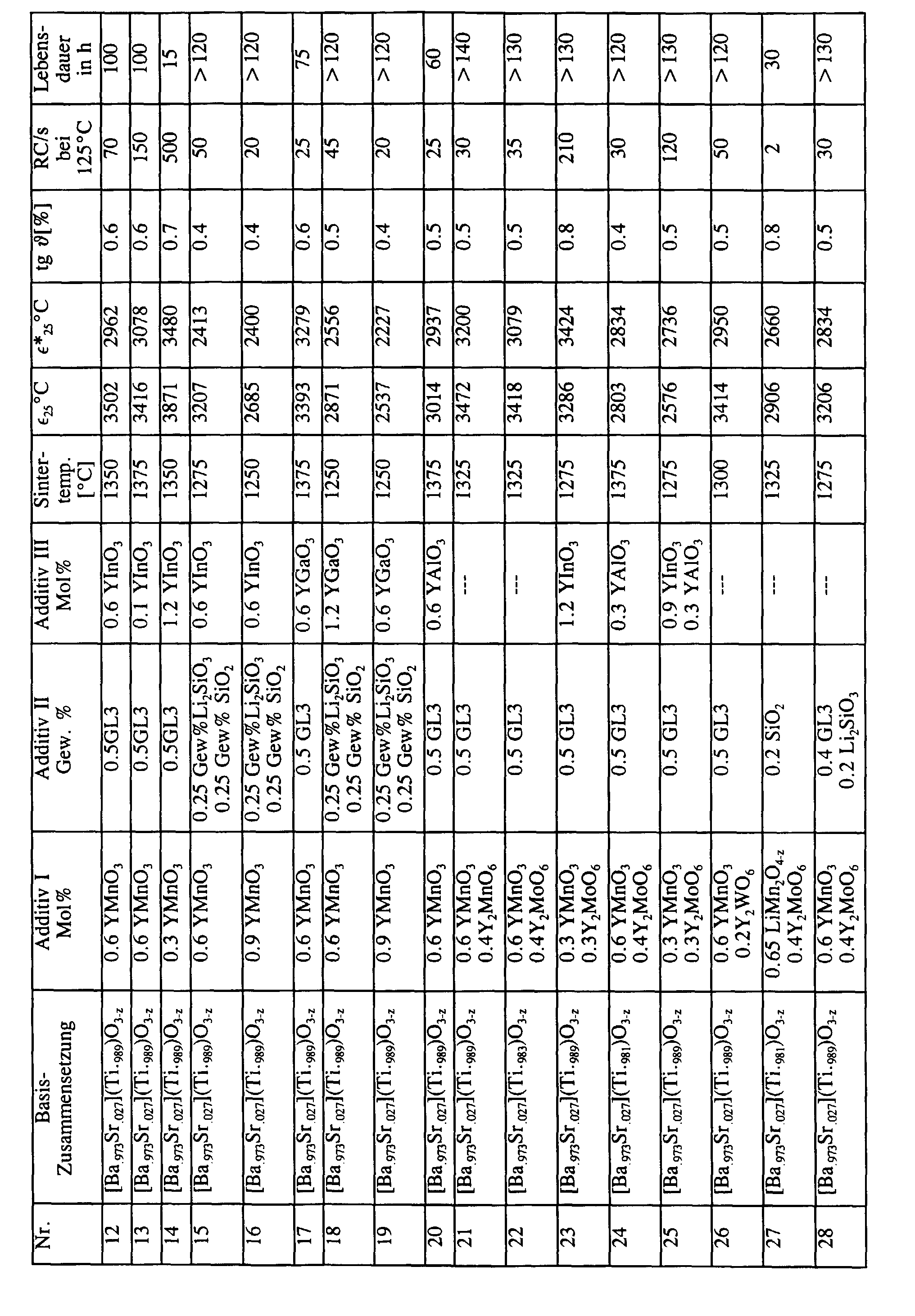

## Patentansprüche

1. Kondensator mit keramischem Dielektrikum und mindestens zwei Elektroden, wobei das keramische Dielektrikum im wesentlichen aus einer dielektrischen, keramischen Zusammensetzung besteht
mit einer Hauptkomponente aus BaTiO₃ und/oder [Ba_{1-y}Sr_{y}]TiₓO_{3-z} mit 0.95 ≤ x ≤ 0.995, 0 ≤ y ≤ 0,04, z = 2(1-x) und
mit mindestens einem Additiv aus der Gruppe
bestehend aus XMnO₃, X₂MoO₆, X₂WO₆, X₂SiO₅ + Mn₂SiO₄ und Li₂SiO₃ + Mn₂SiO₄,
und mindestens einem Additiv aus der Gruppe
bestehend aus Li₂SiO₃, SiO₂ und einer bei 800°C kalzinierte Mischung aus 6 Mol-% Li₂O, 13 Mol-% BaO, 13 mol-% SrO, 13 Mol-% MgO und 55 Mol-% SiO₂,
und gegebenenfalls einem Additiv aus der Gruppe
bestehend aus XInO₃, XGaO₃ und XAlO₃, wobei X ein oder mehrere Elemente der Gruppe Y, Dy und Er ist.

2. Kondensator nach Anspruch 1,
mit mindestens einem Additiv aus der Gruppe
bestehend aus 0,05 bis 3 Mol-% XMnO₃, 0,025 bis 3 Mol-% X₂MoO₆, 0,025 bis 3 Mol-% X₂WO₆, 0,1 bis 2 Mol-% X₂SiO₅ + Mn₂SiO₄, 0,1 bis 2 Mol-% Li₂SiO₃ + Mn₂SiO₄,
und mindestens einem Additiv aus der Gruppe bestehend aus
0,1 bis 3 Mol-% Li₂SiO₃, 0,1 bis 3 Mol-% SiO₂, 0.2 bis 2,5 Gew.-% einer bei 800°C kalzinierte Mischung aus 6 Mol-% Li₂O, 13 Mol-% BaO, 13 mol-% SrO, 13 Mol-% MgO und 55 Mol-% SiO₂,
und gegebenenfalls einem Additiv aus der Gruppe bestehend aus
0,025 bis 10 Mol-% XInO₃, 0,025 bis 10 Mol-% XGaO₃, 0,025 bis 10 Mol-% XAlO₃.

3. Kondensator nach Anspruch 1 und 2,
mit mindestens einem Additiv aus der Gruppe
bestehend aus 0,03 Mol-% XMnO₃, 0,01 Mol-% X₂MoO₆, 0,02 Mol-% X₂WO₆,
und einem weiteren Additiv bestehend aus
1,0 Gew.-% einer bei 800°C kalzinierte Mischung aus 6 Mol-% Li₂O, 13 Mol-% BaO, 13 mol-% SrO, 13 Mol-% MgO und 55 Mol-% SiO₂,

4. Kondensator nach Anspruch 1 oder 2, wobei die Elektroden aus Nickel bestehen.

5. Keramische dielektrische Zusammensetzung mit einer
Hauptkomponente aus BaTiO₃ und/oder [Ba_{1-y}Sr_{y}]TiₓO_{3-z} mit 0.95 ≤ x ≤ 0.995, 0 ≤ y ≤ 0,04, z = 2(1-x) und mit mindestens einem Additiv aus der Gruppe
bestehend aus XMnO₃, X₂MoO₆, X₂WO₆, X₂SiO₅ + Mn₂SiO₄ und Li₂SiO₃ + Mn₂SiO₄,
und mindestens einem Additiv aus der Gruppe
bestehend aus Li₂SiO₃, SiO₂ und einer bei 800°C kalzinierte Mischung aus 6 Mol-% Li₂O, 13 Mol-% BaO, 13 mol-% SrO, 13 Mol-% MgO und 55 Mol-% SiO₂,
und gegebenenfalls einem Additiv aus der Gruppe
bestehend aus XInO₃, XGaO₃ und XAlO₃ besteht.
